# EUROPEAN PATENT APPLICATION

(11) **EP 4 543 052 A1**
(43) Date of publication of application: **23.04.2025**
(21) Application number: 23829905.1
(22) Date of filing: 09.06.2023
(51) Int. Cl.: H04W 4/029, H04W 64/00

(54) **DATA TRANSMISSION METHODS, POSITIONING METHODS, ENTITIES, BASE STATION AND COMPUTER READABLE MEDIUM**

(30) Priority: 29.06.2022 CN 202210750681
(71) Applicant: ZTE CORPORATION, Shenzhen, Guangdong 518057 (CN)
(72) Inventor: GAO, Lei, Shenzhen, Guangdong 518057 (CN); FAN, Wanpeng, Shenzhen, Guangdong 518057 (CN); YE, Minya, Shenzhen, Guangdong 518057 (CN); ZHU, Jinguo, Shenzhen, Guangdong 518057 (CN); HE, Weihua, Shenzhen, Guangdong 518057 (CN); ZHOU, Gongcai, Shenzhen, Guangdong 518057 (CN)
(74) Representative: Canzler & Bergmeier Patentanwälte Partnerschaft mbB
(86) International application number: PCT/CN2023/099348
(87) International publication number: WO 2024/001721

(57) **Abstract**

Provided in the present disclosure is a data transmission method applied to a user plane function, called UPF, entity, including: receiving a positioning initiation request sent from a location management function, called LMF, entity (S11), where the positioning initiation request carries a user equipment, called UE, identifier of a target UE; and bearing, by a preset message according to the positioning initiation request, a new radio positioning protocol annex, called NRPPa, message between the LMF entity and a target base station (S12), where the target base station is a base station corresponding to the target UE.

## Description

### CROSS-REFERENCE TO RELATED APPLICATIONS

This patent application claims priority to Chinese patent application No. 202210750681.8 filed with the China National Intellectual Property Administration on June 29, 2022, the disclosure of which is incorporated herein by reference in its entirety.

### TECHNICAL FIELD

The present disclosure relates to the technical field of communications.

### BACKGROUND

The base station positioning refers to a process in which an operator outputs a positioning capacity through an application programming interface (API) during wireless network construction, so that an application can implement a positioning function by calling the API. The base station positioning technology is a positioning technology that can be copied and popularized in a large scale, and also a positioning technology that is mainly developed by current operators.

The 5G technology has higher and higher requirements for positioning data security, positioning accuracy, positioning time delay and the like, and the positioning scheme that relies on a core network for signaling interaction cannot meet the requirements of service development any more.

### SUMMARY

An embodiment of the present disclosure provides a data transmission method applied to a user plane function entity, a positioning method applied to a location management function entity, a data transmission method applied to a base station, a positioning method applied to an access and mobility management function entity, a user plane function entity, a location management function entity, a base station, an access and mobility management function entity, and a computer-readable medium.

In a first aspect, the present disclosure provides a data transmission method applied to a user plane function (UPF) entity, including: receiving a positioning initiation request sent from a location management function (LMF) entity, wherein the positioning initiation request carries a user equipment (UE) identifier of a target UE; and bearing, by a preset message according to the positioning initiation request, a new radio positioning protocol annex (NRPPa) message between the LMF entity and a target base station, wherein the target base station is a base station corresponding to the target UE.

In some embodiments, bearing, by the preset message according to the positioning initiation request, the NRPPa message between the LMF entity and the target base station includes: bearing, by the preset message, the NRPPa message sent from the LMF entity to the target base station.

In some embodiments, bearing, by the preset message, the NRPPa message sent from the LMF entity to the target base station includes: bearing, by a first type preset message, a positioning information request message sent from the LMF entity to a serving base station, wherein the positioning information request message is configured to request uplink channel sounding reference signal (SRS) configuration information of the target UE; and/or bearing, by a second type preset message, a transmission reception point (TRP) information exchange message sent from the LMF entity to the serving base station, wherein the TRP information exchange message is configured to obtain TRP configuration information; and/or bearing, by the first type preset message, a positioning activation request message sent from the LMF entity to the serving base station, wherein the positioning activation request message is configured to activate the target UE to send an SRS; and/or bearing, by a fourth type preset message, a measurement request message sent from the LMF entity to the serving base station or a neighboring base station, wherein the measurement request message is configured to transfer the uplink channel SRS configuration information to the serving base station or the neighboring base station; and/or bearing, by the first type preset message, a deactivation message issued by the LMF entity, wherein the deactivation message is configured to recover resources, wherein the target base station includes the serving base station and/or at least one neighboring base station.

In some embodiments, bearing, by the preset message according to the positioning initiation request, the NRPPa message between the LMF entity and the target base station includes: bearing, by the preset message, the NRPPa message sent from the target base station to the LMF entity.

In some embodiments, bearing, by the preset message, the NRPPa message sent from the target base station to the LMF entity includes: bearing, by a third type preset message, a positioning information response message sent from a serving base station to the LMF entity, wherein the positioning information response message is configured to respond to uplink channel SRS configuration information to the LMF entity; and/or bearing, by the third type preset message, a positioning activation response message sent from the serving base station to the LMF entity; and/or bearing, by a second type preset message and a fourth type preset message, a measurement response message sent from the serving base station or a neighboring base station to the LMF entity, wherein the measurement response message is configured to transfer an uplink channel SRS measurement result to the LMF entity, wherein the target base station includes the serving base station and/or at least one neighboring base station.

In some embodiments, receiving the positioning initiation request sent from the LMF entity includes: receiving the first type preset message sent from the LMF entity, wherein the first type preset message bears the positioning initiation request.

In some embodiments, the first type preset message is an N1N2 message transfer Namf_Communication_N1N2MessageTransfer message, the second type preset message is a UE-independent N2 message transfer Namf_Communication_NonUeN2MessageTransfer message, the third type preset message is an N2 message notification Namf_Communication_N2InfoNotify message, and the fourth type preset message is a UE-independent N2 message notification Namf_Communication_NonUeN2InfoNotify message.

In a second aspect, the present disclosure provides a positioning method applied to an LMF entity, including: sending, in response to a positioning request sent from an access and mobility management function (AMF) entity, a positioning initiation request to a UPF entity, wherein the positioning request carries a UE identifier of a target UE, and the positioning initiation request carries the UE identifier; interacting an NRPPa message with a target base station through the UPF entity, wherein the target base station is a base station corresponding to the target UE, and the UPF bears, by a preset message, the NRPPa message between the LMF entity and the target base station; and obtaining positioning result information and sending the positioning result information to the AMF entity.

In some embodiments, interacting the NRPPa message with the target base station through the UPF entity includes: sending to the UPF entity a second type preset message bearing a TRP information exchange message sent from the LMF entity to a serving base station, wherein the TRP information exchange message is configured to obtain TRP configuration information; sending to the UPF entity a first type preset message bearing a positioning information request message sent from the LMF entity to the serving base station, wherein the positioning information request message is configured to request uplink channel SRS configuration information of a target UE; receiving a third type preset message which is sent from the UPF entity and bears a positioning information response message sent from the serving base station to the LMF entity, wherein the positioning information response message is configured to respond to uplink channel SRS configuration information to the LMF entity; sending to the UPF entity the first type preset message bearing a positioning activation request message sent from the LMF entity to the serving base station, wherein the positioning activation request message is configured to activate the target UE to send an SRS; receiving a third type preset message which is sent from the UPF entity and bears a positioning activation response message sent from the serving base station to the LMF entity; sending to the UPF entity a fourth type preset message bearing a measurement request message sent from the LMF entity to the serving base station or a neighboring base station, wherein the measurement request message is configured to transfer the uplink channel SRS configuration information to the serving base station or the neighboring base station; receiving a second type preset message and a fourth type preset message which are sent from the UPF entity and bear a measurement response message sent from the serving base station or the neighboring base station to the LMF entity, wherein the measurement response message is configured to transfer an uplink channel SRS measurement result to the LMF entity; sending to the UPF entity the first type preset message bearing a deactivation message, wherein the deactivation message is configured to recover resources, wherein the target base station includes the serving base station and/or at least one neighboring base station.

In some embodiments, sending to the UPF entity the positioning initiation request includes: sending to the UPF entity the first type preset message bearing the positioning initiation request.

In some embodiments, the first type preset message is a Namf_Communication_N1N2MessageTransfer message, the second type preset message is a Namf_Communication_NonUeN2MessageTransfer message, the third type preset message is a Namf_Communication_N2InfoNotify message, and the fourth type preset message is a Namf_Communication_NonUeN2InfoNotify message.

In a third aspect, the present disclosure provides a data transmission method applied to a base station, including: interacting an NRPPa message with an LMF entity through a UPF entity, wherein the UPF bears, by a preset message, the NRPPa message between the LMF entity and the base station.

In some embodiments, interacting the NRPPa message with the LMF entity through the UPF entity includes: receiving the preset message which is sent from the UPF entity and bears the NRPPa message sent from the LMF entity to the base station.

In some embodiments, receiving the preset message which is sent from the UPF entity and bears the NRPPa message sent from the LMF entity to the base station includes: receiving a first type preset message which is sent from the UPF entity and bears a positioning information request message sent from the LMF entity to a serving base station, wherein the positioning information request message is configured to request uplink channel SRS configuration information of a target UE; and/or receiving a second type preset message which is sent from the UPF entity and bears a TRP information exchange message sent from the LMF entity to the serving base station, wherein the TRP information exchange message is configured to obtain TRP configuration information; and/or receiving the first type preset message which is sent from the UPF entity and bears a positioning activation request message sent from the LMF entity to the serving base station, wherein the positioning activation request message is configured to activate the target UE to send an SRS; and/or receiving a fourth type preset message which is sent from the UPF entity and bears a measurement request message sent from the LMF entity to the serving base station or a neighboring base station, wherein the measurement request message is configured to transfer the uplink channel SRS configuration information to the serving base station or the neighboring base station; and/or receiving the first type preset message which is sent from the UPF entity and bears a deactivation message issued by the LMF entity, wherein the deactivation message is configured to recover resources, wherein the base station is the serving base station or the neighboring base station.

In some embodiments, interacting the NRPPa message with the LMF entity through the UPF entity includes: sending to the UPF entity the preset message bearing the NRPPa message sent from the base station to the LMF entity.

In some embodiments, sending to the UPF entity the preset message bearing the NRPPa message sent from the base station to the LMF entity includes: sending to the UPF entity a third type preset message bearing a positioning information response message sent from the base station to the LMF entity, wherein the positioning information response message is configured to respond to uplink channel SRS configuration information to the LMF entity; and/or sending to the UPF entity the third type preset message bearing a positioning activation response message sent from the base station to the LMF entity; and/or sending to the UPF entity a second type preset message and a fourth type preset message bearing a measurement response message sent from the base station to the LMF entity, wherein the measurement response message is configured to transfer an uplink channel SRS measurement result to the LMF entity, wherein the base station is the serving base station or the neighboring base station.

In some embodiments, the first type preset message is a Namf_Communication_N1N2MessageTransfer message, the second type preset message is a Namf_Communication_NonUeN2MessageTransfer message, the third type preset message is a Namf_Communication_N2InfoNotify message, and the fourth type preset message is a Namf_Communication_NonUeN2InfoNotify message.

In a fourth aspect, the present disclosure provides a positioning method applied to an AMF entity, including: sending a positioning request to an LMF entity, wherein the positioning request carries a UE identifier of a target UE; and receiving positioning result information sent from the LMF entity, wherein the LMF entity obtains and sends the positioning result information according to the positioning method in the second aspect of the embodiments of the present disclosure.

In some embodiments, sending the positioning request to the LMF entity includes: sending to the LMF entity an Nlmf_Location_DetermineLocation message bearing the positioning request.

In a fifth aspect, the present disclosure provides a UPF entity, including: one or more processors; and a memory having one or more programs stored thereon which, when executed by the one or more processors, cause the one or more processors to implement the data transmission method according to the first aspect of the embodiments of the present disclosure.

In a sixth aspect, the present disclosure provides an LMF entity, including: one or more processors; and a memory having one or more programs stored thereon which, when executed by the one or more processors, cause the one or more processors to implement the positioning method according to the second aspect of the embodiments of the present disclosure.

In a seventh aspect, the present disclosure provides a base station, including: one or more processors; and a memory having one or more programs stored thereon which, when executed by the one or more processors, cause the one or more processors to implement the data transmission method according to the third aspect of the embodiments of the present disclosure.

In an eighth aspect, the present disclosure provides an AMF entity, including: one or more processors; and a memory having one or more programs stored thereon which, when executed by the one or more processors, cause the one or more processors to implement the positioning method according to the fourth aspect of the embodiments of the present disclosure.

In a ninth aspect, the present disclosure provides a computer-readable medium storing a computer program thereon which, when executed by a processor, causes any one of: the data transmission method according to the first aspect of the present disclosure; the positioning method according to the second aspect of the present disclosure; the data transmission method according to the third aspect of the present disclosure; or the positioning method according to the fourth aspect of the embodiments of the present disclosure, to be implemented.

### BRIEF DESCRIPTION OF DRAWINGS

FIG. 1 is a flowchart of a data transmission method according to an embodiment of the present disclosure;
FIG. 2 is a flowchart of operation S12 in the data transmission method of FIG. 1 according to an embodiment of the present disclosure;
FIG. 3 is a flowchart of a positioning method according to an embodiment of the present disclosure;
FIG. 4 is a detailed flowchart of a positioning method according to an embodiment of the present disclosure;
FIG. 5 is a flowchart of a data transmission method according to an embodiment of the present disclosure;
FIG. 6 is a flowchart of a positioning method according to an embodiment of the present disclosure;
FIG. 7 is a block diagram of a UPF entity according to an embodiment of the present disclosure;
FIG. 8 is a block diagram of an LMF entity according to an embodiment of the present disclosure;
FIG. 9 is a block diagram of a base station according to an embodiment of the present disclosure;
FIG. 10 is a block diagram of an AMF entity according to an embodiment of the present disclosure; and
FIG. 11 is a block diagram of a computer-readable medium according to an embodiment of the present disclosure.

### DETAIL DESCRIPTION OF EMBODIMENTS

To make those skilled in the art better understand the technical solutions of the present disclosure, the data transmission method applied to a user plane function entity, the positioning method applied to a location management function entity, the data transmission method applied to a base station, the positioning method applied to an access and mobility management function entity, the user plane function entity, the location management function entity, the base station, the access and mobility management function, and the computer-readable medium provided in the embodiments of the present disclosure will be described in detail below in conjunction with the drawings.

Exemplary embodiments will be described more sufficiently below with reference to the accompanying drawings, but which may be embodied in different forms and should not be construed as limited to the embodiments set forth herein. Rather, these embodiments are provided so that the present disclosure will be thorough and complete, and will fully convey the scope of the present disclosure to those skilled in the art.

The embodiments of the present disclosure and features thereof may be combined with each other as long as they are not contradictory.

As used herein, the term "and/or" includes any and all combinations of one or more of the associated listed items.

The terminology used herein is for the purpose of describing specific embodiments only and is not intended to limit the present disclosure. As used herein, the singular forms "a", "an" and "the" are intended to include the plural forms as well, unless the context clearly indicates otherwise. It will be further understood that as used herein, the terms "comprise" and/or "consist of ..." specify the presence of stated features, integers, steps, operations, elements, and/or components, but do not preclude the presence or addition of one or more other features, integers, steps, operations, elements, components, and/or groups thereof.

Unless otherwise defined, all terms (including technical and scientific terms) used herein have the same meaning as commonly understood by one of ordinary skill in the art. It will be further understood that terms, such as those defined in commonly used dictionaries, should be interpreted as having a meaning that is consistent with their meaning in the context of the existing art and the present disclosure, and will not be interpreted in an idealized or overly formal sense unless expressly so defined herein.

The uplink time difference of arrival (UL-TDOA) positioning is a positioning technique based on uplink signals, and a user equipment (UE) is positioned according to a measurement result of uplink relative time of arrival (UL-RTOA) measured and reported by each base station. In the standard 3rd Generation Partnership Project (3GPP) protocol, a location management function (LMF) entity, in UL-TDOA positioning, performs message interaction with a radio access network (RAN) based on a new radio positioning protocol annex (NRPPa) through an access and mobility management function (AMF) entity. In 5G networking, the AMF entity is typically deployed in the core network. Therefore, the LMF entity has to perform UL-TDOA positioning through the core network, which involves high signaling overhead as well as an increased time delay in positioning.

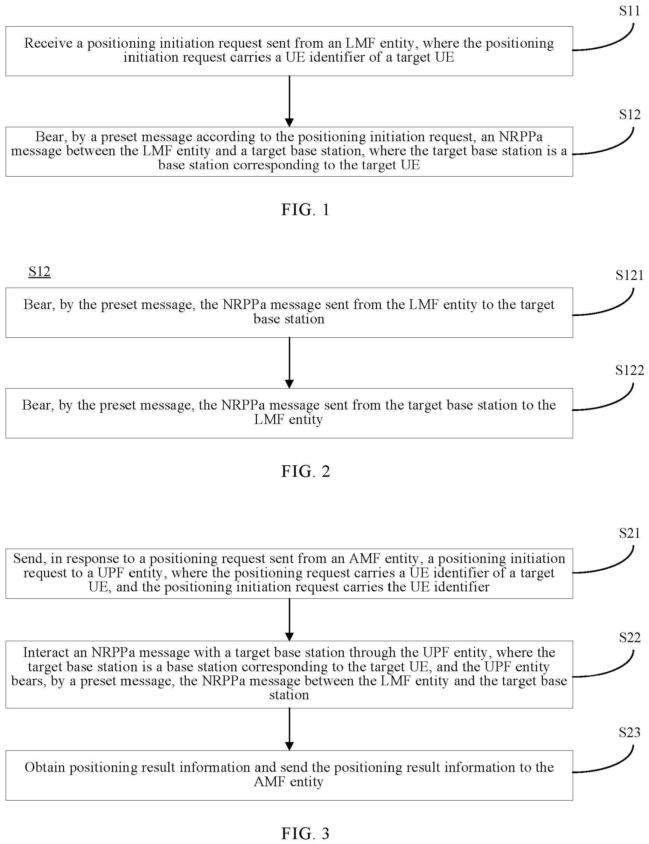

FIG. 1 is a flowchart of a data transmission method according to an embodiment of the present disclosure.

Referring to FIG. 1, a data transmission method according to an embodiment of the present disclosure is applied to a user plane function (UPF) entity, and includes the following operations S11 and S12.

At operation S11, receiving a positioning initiation request sent from an LMF entity, where the positioning initiation request carries a UE identifier of a target UE.

At operation S12, bearing, by a preset message according to the positioning initiation request, a new radio positioning protocol annex (NRPPa) message between the LMF entity and a target base station, where the target base station is a base station corresponding to the target UE.

In the present disclosure, the UPF entity is a core function of 5G data processing and forwarding, and is deployed at an edge of the network.

In the present disclosure, the base station corresponding to the target UE may be a serving base station to which the target UE belongs, or a neighboring base station of the target UE. That is, the target base station may be the serving base station or the neighboring base station, which is not particularly limited in the present disclosure.

In the present disclosure, support for the NRPPa protocol is integrated in the UPF entity. The UPF entity bearing, by the preset message, the NRPPa message between the LMF entity and the target base station means that after the support for the NRPPa protocol being integrated in the UPF entity, the UPF entity can receive an NRPPa message sent from the LMF entity and forward the NRPPa message to the target base station, and receive an NRPPa message sent from the target base station and forward the NRPPa message to the LMF entity.

It should be noted that, in the present disclosure, the NRPPa message born on the preset message by the UPF entity is the same as the NRPPa message transmitted through the AMF entity in the core network according to the current standard. In other words, in the embodiments of the present disclosure, the LMF entity performs message interaction with the RAN in UL-TDOA positioning simply through the UPF entity at the edge of the network instead of through the AMF entity in the core network.

In the present disclosure, the UPF entity bears, by the preset message, the NRPPa message between the LMF entity and the target base station, so that in UL-TDOA positioning, the LMF entity can perform message interaction with the RAN through the UPF entity instead of the core network, thereby greatly reducing the signaling overhead of the core network in the UL-TDOA positioning measurement process, and reducing the time delay of the UL-TDOA positioning measurement, and further the time delay of the entire positioning process.

It should be noted that, in the present disclosure, when initiating positioning of the target UE, the AMF entity transfers the UE identifier of the target UE to the LMF entity. When initiating a positioning measurement process, the LMF entity transfers the UE identifier of the target UE to the UPF entity, so that the UPF entity can bear the NRPPa message between the LMF entity and the target base station according to the UE identifier without obtaining the UE identifier from the core network, and so that the signaling overhead of the core network can be further reduced.

The UE identifier is not particularly limited in the present disclosure. In some embodiments, the UE identifier is a user equipment next generation application protocol identity (UE NGAP ID).

In some embodiments, the UPF entity can bear, by the preset message, the NRPPa message sent from the LMF entity to the target base station.

FIG. 2 is a flowchart of operation S12 in the data transmission method of FIG. 1 according to an embodiment of the present disclosure.

Referring to FIG. 2, the operation S12 in FIG. 1, i.e., bearing, by the preset message according to the positioning initiation request, the NRPPa message between the LMF entity and the target base station, includes: operations S121 and/or S122.

At operation S121, bearing, by the preset message, the NRPPa message sent from the LMF entity to the target base station.

The preset message bearing the NRPPa message sent from the LMF entity to the target base station is not particularly limited in the present disclosure. In some embodiments, the UPF entity supports multiple types of preset messages. For example, the UPF entity supports a first type preset message, a second type preset message, a third type preset message, and a fourth type preset message. In some embodiments, the UPF entity bears, by the first type preset message, the second type preset message, the third type preset message, and the fourth type preset message, various NRPPa messages sent from the LMF entity to the target base station during the UL-TDOA positioning measurement process.

In some embodiments, bearing, by the preset message, the NRPPa message sent from the LMF entity to the target base station includes: bearing, by the first type preset message, a positioning information request message sent from the LMF entity to the serving base station, where the positioning information request message is configured to request uplink channel sounding reference signal (SRS) configuration information of the target UE; and/or bearing, by the second type preset message, a transmission reception point (TRP) information exchange message sent from the LMF entity to the serving base station, where the TRP information exchange message is configured to obtain TRP configuration information; and/or bearing, by the first type preset message, a positioning activation request message sent from the LMF entity to the serving base station, where the positioning activation request message is configured to activate the target UE to send an SRS; and/or bearing, by the fourth type preset message, a measurement request message sent from the LMF entity to the serving base station or the neighboring base station, where the measurement request message is configured to transfer the uplink channel SRS configuration information to the serving base station or the neighboring base station; and/or bearing, by the first type preset message, a deactivation message issued by the LMF entity, where the deactivation message is configured to recover resources, where the target base station includes the serving base station and/or at least one neighboring base station.

In some embodiments, the UPF entity can bear, by the preset message, the NRPPa message sent from the target base station to the LMF entity.

At operation S122, bearing, by the preset message, the NRPPa message sent from the target base station to the LMF entity.

The preset message bearing the NRPPa message sent from the target base station to the LMF entity is not particularly limited in the present disclosure. In some embodiments, the UPF entity supports multiple types of preset messages. For example, the UPF entity supports a first type preset message, a second type preset message, a third type preset message, and a fourth type preset message. In some embodiments, the UPF entity bears, by the first type preset message, the second type preset message, the third type preset message, and the fourth type preset message, various NRPPa messages sent from the target base station to the LMF entity during the UL-TDOA positioning measurement process.

In some embodiments, bearing, by the preset message, the NRPPa message sent from the target base station to the LMF entity includes: bearing, by the third type preset message, a positioning information response message sent from the serving base station to the LMF entity, where the positioning information response message is configured to respond to uplink channel SRS configuration information to the LMF entity; and/or bearing, by the third type preset message, a positioning activation response message sent from the serving base station to the LMF entity; and/or bearing, by the second type preset message and the fourth type preset message, a measurement response message sent from the serving base station or the neighboring base station to the LMF entity, where the measurement response message is configured to transfer an uplink channel SRS measurement result to the LMF entity, where the target base station includes the serving base station and/or at least one neighboring base station.

How the LMF entity sends the positioning initiation request to the UPF entity is not particularly limited in the present disclosure.

In some embodiments, the LMF entity sends to the UPF entity the first type preset message bearing the positioning initiation request.

In some embodiments, receiving the positioning initiation request sent from the LMF entity includes: receiving the first type preset message sent from the LMF entity, where the first type preset message bears the positioning initiation request.

The first type preset message, the second type preset message, the third type preset message and the fourth type preset message supported by the UPF entity are not particularly limited in the present disclosure.

In the present disclosure, after the support for the NRPPa protocol being integrated in the UPF entity, the NRPPa message between the LMF entity and the target base station, which is born on the preset message by the UPF entity, corresponds to the NRPPa message to be interacted with the AMF entity according to the current standard. Accordingly, in some embodiments, after the support for the NRPPa protocol being integrated in the UPF entity, the UPF entity supports messages supported by the AMF entity in the UL-TDOA positioning process based on the current standard.

In some embodiments, the first type preset message is a Namf_Communication_N1N2MessageTransfer message, the second type preset message is a Namf_Communication_NonUeN2MessageTransfer message, the third type preset message is a Namf_Communication_N2InfoNotify message, and the fourth type preset message is a Namf_Communication_NonUeN2InfoNotify message.

In some embodiments, when the support for the NRPPa protocol is integrated in the UPF entity, the UPF entity is linked to the RAN, and supports an N2 transport for transmitting a network positioning message.

In some embodiments, the UPF entity parses the NRPPa messages in the Namf_Communication_NonUeN2MessageTransfer message and the Namf_Communication_N1N2MessageTransfer message, and interacts with the RAN through the N2 transport.

FIG. 3 is a flowchart of a positioning method according to an embodiment of the present disclosure.

Referring to FIG. 3, a positioning method according to an embodiment of the present disclosure is applied to an LMF entity, and includes the following operations S21 to S23.

At operation S21, sending, in response to a positioning request sent from an AMF entity, a positioning initiation request to a UPF entity, where the positioning request carries a UE identifier of a target UE, and the positioning initiation request carries the UE identifier.

At operation S22, interacting an NRPPa message with a target base station through the UPF entity, where the target base station is a base station corresponding to the target UE, and the UPF entity bears, by a preset message, the NRPPa message between the LMF entity and the target base station.

At operation S23, obtaining positioning result information and sending the positioning result information to the AMF entity.

In the present disclosure, the base station corresponding to the target UE may be a serving base station to which the target UE belongs, or a neighboring base station of the target UE. That is, the target base station may be the serving base station or the neighboring base station, which is not particularly limited in the present disclosure.

In the present disclosure, support for the NRPPa protocol is integrated in the UPF entity. The UPF entity bearing, by the preset message, the NRPPa message between the LMF entity and the target base station means that after the support for the NRPPa protocol being integrated in the UPF entity, the UPF entity can receive an NRPPa message sent from the LMF entity and forward the NRPPa message to the target base station, and receive an NRPPa message sent from the target base station and forward the NRPPa message to the LMF entity.

It should be noted that, in the present disclosure, the NRPPa message born on the preset message by the UPF entity is the same as the NRPPa message transmitted through the AMF entity in the core network according to the current standard. In other words, in the embodiments of the present disclosure, the LMF entity performs message interaction with the RAN in UL-TDOA positioning simply through the UPF entity at the edge of the network instead of through the AMF entity in the core network.

In the present disclosure, the UPF entity bears, by the preset message, the NRPPa message between the LMF entity and the target base station, so that in UL-TDOA positioning, the LMF entity can perform message interaction with the RAN through the UPF entity instead of the core network, thereby greatly reducing the signaling overhead of the core network in the UL-TDOA positioning measurement process, and reducing the time delay of the UL-TDOA positioning measurement, and further the time delay of the entire positioning process.

It should be noted that, in the present disclosure, when initiating positioning of the target UE, the AMF entity transfers the UE identifier of the target UE to the LMF entity. When initiating a positioning measurement process, the LMF entity transfers the UE identifier of the target UE to the UPF entity, so that the UPF entity can bear the NRPPa message between the LMF entity and the target base station according to the UE identifier without obtaining the UE identifier from the core network, and so that the signaling overhead of the core network can be further reduced.

The UE identifier is not particularly limited in the present disclosure. In some embodiments, the UE identifier is a user equipment next generation application protocol identity (UE NGAP ID).

In the present disclosure, the process of the LMF entity interacting the NRPPa message with the target base station through the UPF entity is a process of performing UL-TDOA positioning measurement by the LMF entity. The process of the LMF entity interacting the NRPPa message with the target base station through the UPF entity is not particularly limited in the present disclosure.

In some embodiments, the UPF entity supports multiple types of preset messages. For example, the UPF entity supports a first type preset message, a second type preset message, a third type preset message, and a fourth type preset message. In some embodiments, the UPF entity bears, by the first type preset message, the second type preset message, the third type preset message, and the fourth type preset message, various NRPPa messages between the LMF entity and the target base station during the UL-TDOA positioning measurement process. Accordingly, the LMF entity sends or receives the first type preset message, the second type preset message, the third type preset message, and the fourth type preset message, to interact NRPPa messages with the target base station.

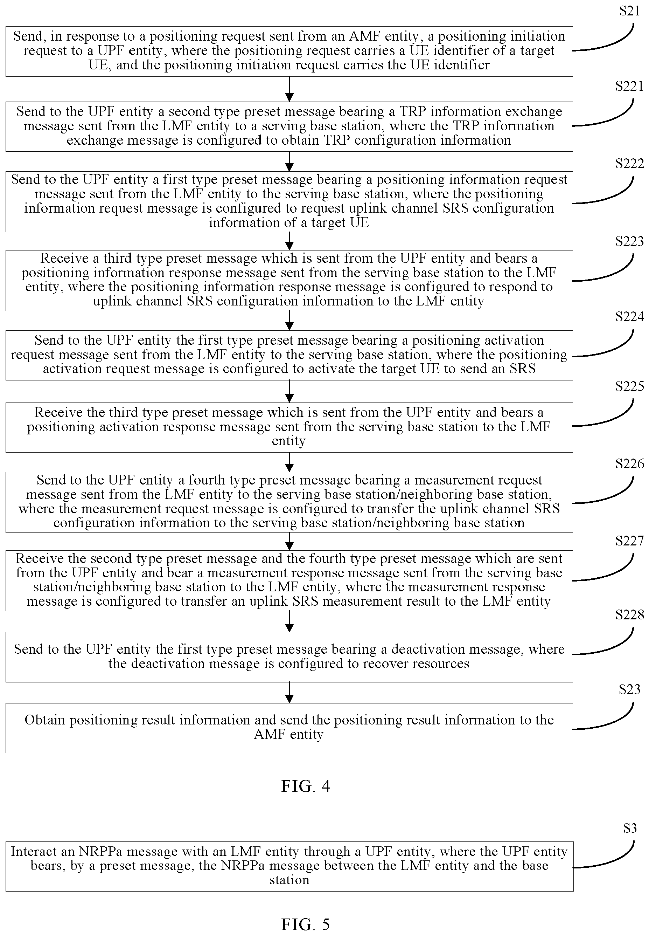

FIG. 4 is a detailed flowchart of a positioning method according to an embodiment of the present disclosure.

Referring to FIG. 4, the operation S22 in FIG. 3, i.e., interacting the NRPPa message with the target base station through the UPF entity, may include: the following operations S221 to S228.

At operation S221, sending to the UPF entity a second type preset message bearing a TRP information exchange message sent from the LMF entity to a serving base station, where the TRP information exchange message is configured to obtain TRP configuration information.

At operation S222, sending to the UPF entity a first type preset message bearing a positioning information request message sent from the LMF entity to the serving base station, where the positioning information request message is configured to request uplink channel sounding reference signal (SRS) configuration information of a target UE.

At operation S223, receiving a third type preset message which is sent from the UPF entity and bears a positioning information response message sent from the serving base station to the LMF entity, where the positioning information response message is configured to respond to uplink channel SRS configuration information to the LMF entity.

At operation S224, sending to the UPF entity the first type preset message bearing a positioning activation request message sent from the LMF entity to the serving base station, where the positioning activation request message is configured to activate the target UE to send an SRS.

At operation S225, receiving the third type preset message which is sent from the UPF entity and bears a positioning activation response message sent from the serving base station to the LMF entity.

At operation S226, sending to the UPF entity a fourth type preset message bearing a measurement request message sent from the LMF entity to the serving base station or a neighboring base station, where the measurement request message is configured to transfer the uplink channel SRS configuration information to the serving base station or the neighboring base station.

At operation S227, receiving the second type preset message and the fourth type preset message which are sent from the UPF entity and bear a measurement response message sent from the serving base station or the neighboring base station to the LMF entity, where the measurement response message is configured to transfer an uplink channel SRS measurement result to the LMF entity.

At operation S228, sending to the UPF entity the first type preset message bearing a deactivation message, where the deactivation message is configured to recover resources.

In some embodiments, the target base station includes the serving base station and/or at least one neighboring base station.

The following explains the operations S221 to S228.

The operation S221 corresponds to the operation of obtaining, by the LMF entity, TRP configuration information desired for UL-TDOA positioning through a TRP information exchange procedure.

The operation S222 corresponds to the operation of sending an NRPPa positioning information request message from the LMF entity to a serving base station, and requesting uplink channel SRS configuration information of a target UE.

The operation S223 corresponds to the operation of configuring, by the serving base station, uplink channel SRS resources for the target UE after receiving the NRPPa positioning information request message, and responding the uplink channel SRS configuration information to the LMF entity through an NRPPa positioning information response.

The operation S224 corresponds to the operation of sending an NRPPa positioning activation request message from the LMF entity to the serving base station, to activate the target UE to send an uplink channel SRS.

The operation S225 corresponds to the operation of activating the target UE by the serving base station, and responding an NRPPa positioning activation response message to the LMF entity.

The operation S226 corresponds to the operation of sending, by the LMF entity, the uplink channel SRS configuration information to the base station corresponding to the target UE through an NRPPa measurement request message. The NRPPa measurement request message carries all information desired by the base station/TRP for uplink measurement.

The operation S227 corresponds to the operation of reporting, by the base station corresponding to the target UE after receiving the uplink SRS sent from the target UE, a measurement result of the uplink channel SRS to the LMF entity through an NRPPa measurement response message.

The operation S228 corresponds to the operation of issuing a deactivation message by the LMF entity to recover resources.

How the LMF entity sends the positioning initiation request to the UPF entity is not particularly limited in the present disclosure.

In some embodiments, sending to the UPF entity the positioning initiation request includes: sending to the UPF entity the first type preset message bearing the positioning initiation request.

In the present disclosure, after the support for the NRPPa protocol being integrated in the UPF entity, the NRPPa message between the LMF entity and the target base station, which is born on the preset message by the UPF entity, corresponds to the NRPPa message to be interacted with the AMF entity according to the current standard. Accordingly, in some embodiments, after the support for the NRPPa protocol being integrated in the UPF entity, the UPF entity supports messages supported by the AMF entity in the UL-TDOA positioning process based on the current standard.

In some embodiments, the first type preset message is a Namf_Communication_N1N2MessageTransfer message, the second type preset message is a Namf_Communication_NonUeN2MessageTransfer message, the third type preset message is a Namf_Communication_N2InfoNotify message, and the fourth type preset message is a Namf_Communication_NonUeN2InfoNotify message.

FIG. 5 is a flowchart of a data transmission method according to an embodiment of the present disclosure.

Referring to FIG. 5, a data transmission method according to an embodiment of the present disclosure is applied to a base station, and includes the following operation S3.

At operation S3, interacting an NRPPa message with an LMF entity through a UPF entity, where the UPF entity bears, by a preset message, the NRPPa message between the LMF entity and the base station.

In the present disclosure, the base station may be a serving base station to which the target UE belongs, or a neighboring base station of the target UE, which is not particularly limited in the present disclosure.

In the present disclosure, support for the NRPPa protocol is integrated in the UPF entity. The UPF entity bearing, by the preset message, the NRPPa message between the LMF entity and the base station means that after the support for the NRPPa protocol being integrated in the UPF entity, the UPF entity can receive an NRPPa message sent from the LMF entity and forward the NRPPa message to the base station, and receive an NRPPa message sent from the base station and forward the NRPPa message to the LMF entity.

It should be noted that, in the present disclosure, the NRPPa message born on the preset message by the UPF entity is the same as the NRPPa message transmitted through the AMF entity in the core network according to the current standard. In other words, in the embodiments of the present disclosure, the base station can transmit an NRPPa message, which to be transmitted through an AMF entity in the current standard, through a UPF entity. On the basis, the LMF entity performs message interaction with the RAN in UL-TDOA positioning simply through the UPF entity at the edge of the network instead of through the AMF entity in the core network.

In the present disclosure, the UPF entity bears, by the preset message, the NRPPa message between the LMF entity and the base station, and the base station can receive or send the NRPPa message through the UPF entity, so that in UL-TDOA positioning, the LMF entity can perform message interaction with the RAN through the UPF entity instead of the core network, thereby greatly reducing the signaling overhead of the core network in the UL-TDOA positioning measurement process, and reducing the time delay of the UL-TDOA positioning measurement, and further the time delay of the entire positioning process.

In some embodiments, interacting the NRPPa message with the LMF entity through the UPF entity includes: receiving the preset message which is sent from the UPF entity and bears the NRPPa message sent from the LMF entity to the base station.

In some embodiments, receiving the preset message which is sent from the UPF entity and bears the NRPPa message sent from the LMF entity to the base station includes: receiving a first type preset message which is sent from the UPF entity and bears a positioning information request message sent from the LMF entity to a serving base station, where the positioning information request message is configured to request uplink channel sounding reference signal (SRS) configuration information of a target UE; and/or receiving a second type preset message which is sent from the UPF entity and bears a transmission reception point (TRP) information exchange message sent from the LMF entity to the serving base station, where the TRP information exchange message is configured to obtain TRP configuration information; and/or receiving the first type preset message which is sent from the UPF entity and bears a positioning activation request message sent from the LMF entity to the serving base station, where the positioning activation request message is configured to activate the target UE to send an SRS; and/or receiving a fourth type preset message which is sent from the UPF entity and bears a measurement request message sent from the LMF entity to the serving base station or a neighboring base station, where the measurement request message is configured to transfer the uplink channel SRS configuration information to the serving base station or the neighboring base station; and/or receiving the first type preset message which is sent from the UPF entity and bears a deactivation message issued by the LMF entity, where the deactivation message is configured to recover resources, where the base station is the serving base station or the neighboring base station.

In some embodiments, interacting the NRPPa message with the LMF entity through the UPF entity includes: sending to the UPF entity the preset message bearing the NRPPa message sent from the base station to the LMF entity.

In some embodiments, sending to the UPF entity the preset message bearing the NRPPa message sent from the base station to the LMF entity includes: sending to the UPF entity a third type preset message which is sent from the UPF entity and bears a positioning information response message sent from the base station to the LMF entity, where the positioning information response message is configured to respond to uplink channel SRS configuration information to the LMF entity; and/or sending to the UPF entity the third type preset message bearing a positioning activation response message sent from the base station to the LMF entity; and/or sending to the UPF entity a second type preset message and a fourth type preset message bearing a measurement response message sent from the base station to the LMF entity, where the measurement response message is configured to transfer an uplink channel SRS measurement result to the LMF entity, where the base station is the serving base station or the neighboring base station.

In some embodiments, after receiving the first type preset message which is sent from the UPF entity and bears the positioning information request message sent from the LMF entity to the serving base station, the base station configures uplink channel SRS resources for the target UE, and then sends to the UPF entity the third type preset message bearing a positioning information response message sent from the base station to the LMF entity; after receiving the first type preset message which is sent from the UPF entity and bears the positioning activation request message sent from the LMF entity to the serving base station, the base station activates the target UE to send the uplink channel SRS, and then sends to the UPF entity the third type preset message bearing a positioning activation response message sent from the base station to the LMF entity; and after receiving the fourth type preset message which is sent from the UPF entity and bears the measurement request message sent from the LMF entity to the serving base station or the neighboring base station, the base station measures the uplink channel SRS sent from the UE, and then sends to the UPF entity the second type preset message and the fourth type preset message bearing a measurement response message sent from the base station to the LMF entity.

In the present disclosure, after the support for the NRPPa protocol being integrated in the UPF entity, the NRPPa message between the LMF entity and the base station, which is born on the preset message by the UPF entity, corresponds to the NRPPa message to be interacted with the AMF entity according to the current standard. In some embodiments, after the support for the NRPPa protocol being integrated in the UPF entity, the UPF entity supports messages supported by the AMF entity in the UL-TDOA positioning process based on the current standard.

In some embodiments, the first type preset message is a Namf_Communication_N1N2MessageTransfer message, the second type preset message is a Namf_Communication_NonUeN2MessageTransfer message, the third type preset message is a Namf_Communication_N2InfoNotify message, and the fourth type preset message is a Namf_Communication_NonUeN2InfoNotify message.

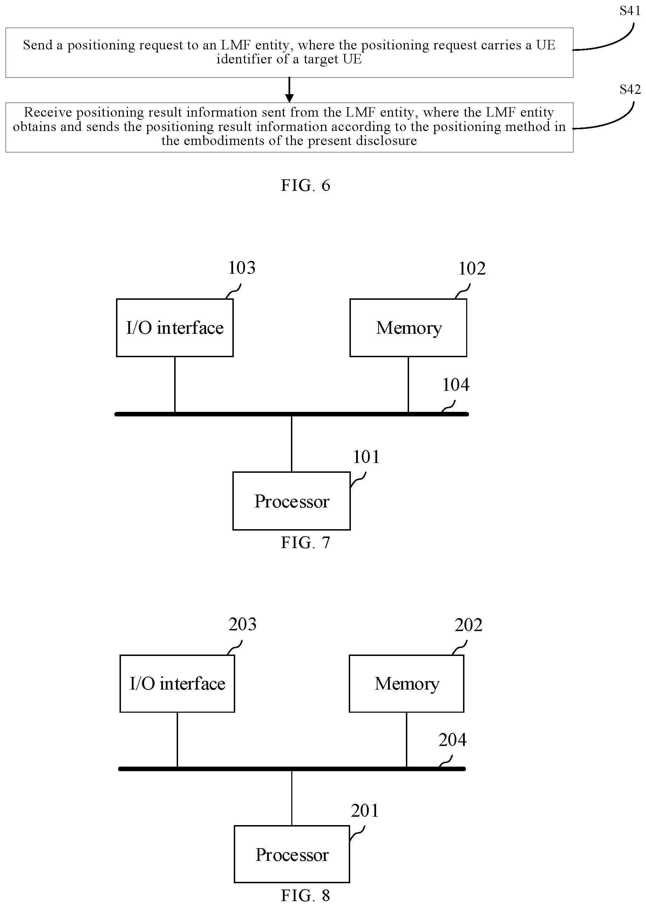

FIG. 6 is a flowchart of a positioning method according to an embodiment of the present disclosure.

Referring to FIG. 6, a positioning method according to an embodiment of the present disclosure is applied to an AMF entity, and includes the following operations S41 and S42.

At operation S41, sending a positioning request to an LMF entity, where the positioning request carries a UE identifier of a target UE.

At operation S42, receiving positioning result information sent from the LMF entity, where the LMF entity obtains and sends the positioning result information according to the positioning method in the embodiments of the present disclosure.

In the present disclosure, when initiating positioning of the target UE, the AMF entity transfers the UE identifier of the target UE to the LMF entity. When initiating a positioning measurement process, the LMF entity transfers the UE identifier of the target UE to the UPF entity, so that the UPF entity can bear the NRPPa message between the LMF entity and a target base station according to the UE identifier without obtaining the UE identifier from the core network, and so that the signaling overhead of the core network can be further reduced.

The UE identifier is not particularly limited in the present disclosure. In some embodiments, the UE identifier is a user equipment next generation application protocol identity (UE NGAP ID).

In some embodiments, sending the positioning request to the LMF entity includes: sending to the LMF entity an Nlmf_Location_DetermineLocation message bearing the positioning request.

FIG. 7 is a block diagram of a UPF entity according to an embodiment of the present disclosure.

Referring to FIG. 7, a UPF entity according to an embodiment of the present disclosure includes one or more processors 101, a memory 102, and one or more I/O interfaces 103.

The memory 102 has one or more programs stored thereon which, when executed by the one or more processors 101, cause the one or more processors 101 to implement the data transmission method according to any embodiment of the present disclosure.

The one or more I/O interfaces 103 are connected between each processor and the memory, and configured to enable information interaction between the processor 101 and the memory 102.

Each processor 101 is a device with a data processing capacity, including but not limited to a central processing unit (CPU), or the like. The memory 102 is a device with a data storage capacity, including but not limited to, a random access memory (RAM, more specifically SDRAM, DDR, etc.), a read-only memory (ROM), an electrically erasable programmable read-only memory (EEPROM) or a flash memory (FLASH). Each I/O interface (read/write interface) 103 is connected between the processor 101 and the memory 102 to enable information interaction between the processor 101 and the memory 102, and includes, but is not limited to, a bus or the like.

In some embodiments, the processor 101, the memory 102, and the I/O interface 103 are interconnected via a bus 104, and further connected to other components of a computing device.

FIG. 8 is a block diagram of an LMF entity according to an embodiment of the present disclosure.

Referring to FIG. 8, an LMF entity according to an embodiment of the present disclosure includes: one or more processors 201, a memory 202, and one or more I/O interfaces 203.

The memory 202 has one or more programs stored thereon which, when executed by the one or more processors 201, cause the one or more processors 201 to implement the positioning method according to any embodiment of the present disclosure.

The one or more I/O interfaces 203 are connected between each processor and the memory, and configured to enable information interaction between the processor 201 and the memory 202.

Each processor 201 is a device with a data processing capacity, including but not limited to a central processing unit (CPU), or the like. The memory 202 is a device with a data storage capacity, including but not limited to, a random access memory (RAM, more specifically SDRAM, DDR, etc.), a read-only memory (ROM), an electrically erasable programmable read-only memory (EEPROM) or a flash memory (FLASH). Each I/O interface (read/write interface) 203 is connected between the processor 201 and the memory 202 to enable information interaction between the processor 201 and the memory 202, and includes, but is not limited to, a bus or the like.

In some embodiments, the processor 201, the memory 202, and the I/O interface 203 are interconnected via a bus 204, and further connected to other components of a computing device.

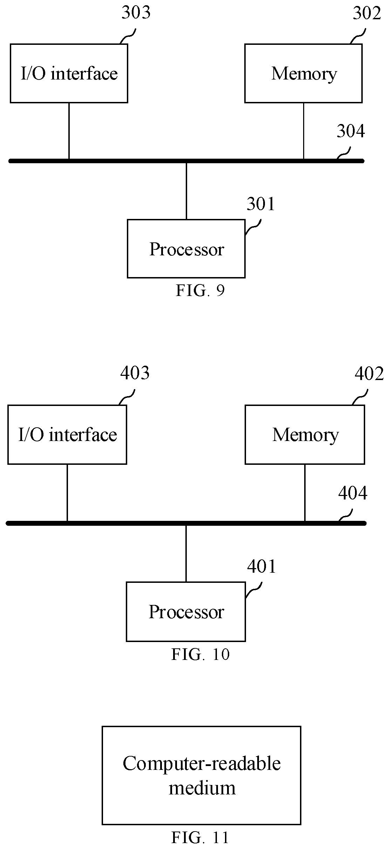

FIG. 9 is a block diagram of a base station according to an embodiment of the present disclosure.

Referring to FIG. 9, a base station according to an embodiment of the present disclosure includes: one or more processors 301, a memory 302, and one or more I/O interfaces 303.

The memory 302 has one or more programs stored thereon which, when executed by the one or more processors 301, cause the one or more processors 301 to implement the data transmission method according to any embodiment the present disclosure.

The one or more I/O interfaces 303 are connected between each processor and the memory, and configured to enable information interaction between the processor and the memory.

Each processor 301 is a device with a data processing capacity, including but not limited to a central processing unit (CPU), or the like. The memory 302 is a device with a data storage capacity, including but not limited to, a random access memory (RAM, more specifically SDRAM, DDR, etc.), a read-only memory (ROM), an electrically erasable programmable read-only memory (EEPROM) or a flash memory (FLASH). Each I/O interface (read/write interface) 303 is connected between the processor 301 and the memory 302 to enable information interaction between the processor 301 and the memory 302, and includes, but is not limited to, a bus or the like.

In some embodiments, the processor 301, the memory 302, and the I/O interface 303 are interconnected via a bus 304, and further connected to other components of a computing device.

FIG. 10 is a block diagram of an AMF entity according to an embodiment of the present disclosure.

Referring to FIG. 10, an AMF entity according to an embodiment of the present disclosure includes: one or more processors 401, a memory 402, and one or more I/O interfaces 403.

The memory 402 has one or more programs stored thereon which, when executed by the one or more processors 401, cause the one or more processors 401 to implement the positioning method according to any embodiment of the present disclosure.

The one or more I/O interfaces 403 are connected between each processor and the memory, and configured to enable information interaction between the processor and the memory.

Each processor 401 is a device with a data processing capacity, including but not limited to a central processing unit (CPU), or the like. The memory 402 is a device with a data storage capacity, including but not limited to, a random access memory (RAM, more specifically SDRAM, DDR, etc.), a read-only memory (ROM), an electrically erasable programmable read-only memory (EEPROM) or a flash memory (FLASH). Each I/O interface (read/write interface) 403 is connected between the processor 401 and the memory 402 to enable information interaction between the processor 401 and the memory 402, and includes, but is not limited to, a bus or the like.

In some embodiments, the processor 401, the memory 402, and the I/O interface 403 are interconnected via a bus 404, and further connected to other components of a computing device.

FIG. 11 is a block diagram of a computer-readable medium according to an embodiment of the present disclosure.

Referring to FIG. 11, a computer-readable medium according to an embodiment of the present disclosure has a computer program stored thereon which, when executed by a processor, causes the data transmission method or the positioning method according to any embodiment of the present disclosure to be implemented.

To improve understanding of the technical solution of the present disclosure for those skilled in the art, the technical solution of the present disclosure will be further described in detail below with the help of accompanying drawings and specific examples.

### Example I

In this example, a UPF entity is enhanced to support NRPPa functionality of an AMF entity, and an LMF entity transfers an NRPPa message through the UPF entity in UL-TDOA positioning.

In this example, the AMF entity supports transfer of a UE NGAP ID to the LMF entity deployed at the edge of the network while sending Nlmf_Location_DetermineLocation Request.

In this example, the LMF entity supports transfer of the UE NGAP ID to the UPF entity while initiating a UE-related procedure to the UPF entity. In other words, when an Namf_Communication_N1N2MessageTransfer message is initiated to the UPF entity, the message carries the UE NGAP ID.

In this example, the UPF entity is linked to a RAN, supports transfer of a Network Positioning Message via an N2 transport, supports a Namf_Communication_N1N2MessageTransfer message, a Namf_Communication_NonUeN2MessageTransfer message, a Namf_Communication_N2InfoNotify message, and a Namf_Communication_NonUeN2InfoNotify message, and supports carrying an NRPPa message in any of the above message.

The flow of performing UL-TDOA positioning measurement in this example includes the following operations 501 to 509.

In operation 501, an LMF entity obtains TRP configuration information desired for UL-TDOA positioning through a TRP information exchange procedure, and a UPF entity bears an NRPPa message by a Namf_Communication_NonUeN2MessageTransfer message.

In operation 502, the LMF entity sends to a serving gNB an NRPPa positioning information request message to request uplink channel SRS configuration information of a target UE, and the UPF entity bears an NRPPa message by a Namf_Communication_N1N2MessageTransfer message.

In operation 503, the serving gNB determines available uplink channel SRS resources, and configures the uplink channel SRS resources for the target UE.

In operation 504, the serving gNB responds the uplink channel SRS configuration information to the LMF entity through an NRPPa positioning information response message, and the UPF entity bears an NRPPa message by a Namf_Communication_N2InfoNotify message.

In operation 505, for a semi-persistent or aperiodic SRS, the LMF entity sends to the serving gNB an NRPPa positioning activation request message, to activate the UE to send an uplink channel SRS. The gNB activates the UE to send an uplink channel SRS, and responses an NRPPa positioning activation response message. The target UE sends the uplink channel SRS according to the time requirement in the uplink channel SRS resource configuration, and the UPF entity bears NRPPa messages by a Namf_Communication_N1N2MessageTransfer message and a Namf_Communication_N2InfoNotify message.

In operation 506, the LMF entity sends to a relevant gNB the uplink channel SRS configuration information through an NRPPa measurement request message. The message contains all necessary information required by gNB/TRP for uplink measurement, and the UPF entity bears an NRPPa message by a Namf_Communication_NonUeN2MessageTransfer message.

In operation 507, the gNB measures an uplink channel SRS sent from the target UE.

In operation 508, the gNB reports an uplink channel SRS measurement result to the LMF entity through an NRPPa measurement response message, and the UPF entity bears NRPPa messages by a Namf_Communication_NonUeN2MessageTransfer message and a Namf_Communication _NonUeN2InfoNotify message.

In operation 509, the LMF entity issues a deactivation message to recover resources. The UPF entity bears an NRPPa message by a Namf_Communication_N1N2MessageTransfer message.

In this example, the UPF entity parses the NRPPa messages in the Namf_Communication_NonUeN2MessageTransfer message and the Namf_Communication_N1N2MessageTransfer message, and then interacts with the RAN through the N2 transport.

### Example II

In this example, the flow of UL-TDOA positioning includes the following operations 601 to 608.

In operation 601, a location service (LCS) client sends to a gateway mobile location center (GMLC) a request for a location of a target UE.

In operation 602, the GMLC calls a Namf_Location_RequestPosInfo service to an AMF entity to request a current location of the UE.

In operation 603, the AMF entity determines whether to perform paging according to a UE attachment condition.

In operation 604, the AMF entity sends an Nlmf_Location_DetermineLocation request to an LMF entity.

In operation 605, the LMF entity cooperates with a UPF entity, the gNB/TRP, and the UE to perform UL-TDOA positioning, and the UPF entity supports transfer of NRPPa messages at an edge side. When the LMF entity cooperates with the UPF entity, the gNB/TRP, and the UE to perform UL-TDOA positioning, the flow is the same as operations 501 to 509 in Example I.

In operation 606, the LMF entity feeds back a positioning result to the AMF entity.

In operation 607, the AMF entity returns a Namf_Location_ProvidePosInfo response to the GMLC to return the current location of the UE. The service operations include position estimation, age, accuracy, and the like.

In operation 608, the GMLC sends a location service response to the LCS client.

According to this example, after the control plane network elements like the GMLC and the LMF entity sink to an edge of the network, the UPF entity and the LMF entity which sink to the edge, in response to an indoor high-precision positioning request, cooperate with the RAN to complete the location measurement process, which does not need the cooperation of the AMF entity in the core network to carry out NRPPa message interaction, and the positioning time delay is effectively reduced.

Those of ordinary skill in the art will appreciate that all or some operations of the above described method, functional modules/units in the system and apparatus may be implemented as software, firmware, hardware, and suitable combinations thereof. In a hardware implementation, the division between the functional modules/units mentioned in the above description does not necessarily correspond to the division of physical components; for example, one physical component may have multiple functions, or one function or operation may be performed cooperatively by several physical components. Some or all physical components may be implemented as software executed by a processor, such as a CPU, a digital signal processor or microprocessor, or implemented as hardware, or implemented as an integrated circuit, such as an application specific integrated circuit. Such software may be distributed on a computer-readable medium which may include a computer storage medium (or non-transitory medium) and communication medium (or transitory medium). As is well known to those of ordinary skill in the art, the term computer storage medium includes volatile and nonvolatile, removable and non-removable medium implemented in any method or technology for storing information, such as computer-readable instructions, data structures, program modules or other data. The computer storage medium includes, but is not limited to, an RAM, an ROM, an EEPROM, a flash or any other memory technology, a CD-ROM, a digital versatile disk (DVD) or any other optical disk storage, a magnetic cartridge, a magnetic tape, a magnetic disk storage or any other magnetic storage device, or may be any other medium used for storing the desired information and accessible by a computer. Moreover, it is well known to those ordinary skilled in the art that a communication medium typically includes a computer-readable instruction, a data structure, a program module, or other data in a modulated data signal, such as a carrier wave or other transport mechanism, and may include any information delivery medium.

The present disclosure has disclosed exemplary embodiments, and although specific terms are employed, they are used and should be interpreted merely in a generic and descriptive sense, not for purposes of limitation. In some instances, as would be apparent to one skilled in the art, features, characteristics and/or elements described in connection with a particular embodiment may be used alone or in combination with features, characteristics and/or elements described in connection with another embodiment, unless expressly stated otherwise. It will, therefore, be understood by those skilled in the art that various changes in form and details may be made therein without departing from the scope of the present disclosure as set forth in the appended claims.

## Claims

1. A data transmission method applied to a user plane function, called UPF, entity, comprising:
receiving a positioning initiation request sent from a location management function, called LMF, entity, wherein the positioning initiation request carries a user equipment, called UE, identifier of a target UE; and
bearing, by a preset message according to the positioning initiation request, a new radio positioning protocol annex, called NRPPa, message between the LMF entity and a target base station, wherein the target base station is a base station corresponding to the target UE.

2. The data transmission method according to claim 1, wherein bearing, by the preset message according to the positioning initiation request, the NRPPa message between the LMF entity and the target base station comprises:
bearing, by the preset message, the NRPPa message sent from the LMF entity to the target base station.

3. The data transmission method according to claim 2, wherein bearing, by the preset message, the NRPPa message sent from the LMF entity to the target base station comprises:
bearing, by a first type preset message, a positioning information request message sent from the LMF entity to a serving base station, wherein the positioning information request message is configured to request uplink channel sounding reference signal, called SRS, configuration information of the target UE; and/or
bearing, by a second type preset message, a transmission reception point, called TRP, information exchange message sent from the LMF entity to the serving base station, wherein the TRP information exchange message is configured to obtain TRP configuration information; and/or
bearing, by the first type preset message, a positioning activation request message sent from the LMF entity to the serving base station, wherein the positioning activation request message is configured to activate the target UE to send an SRS; and/or
bearing, by a fourth type preset message, a measurement request message sent from the LMF entity to the serving base station or a neighboring base station, wherein the measurement request message is configured to transfer the uplink channel SRS configuration information to the serving base station or the neighboring base station; and/or
bearing, by the first type preset message, a deactivation message issued by the LMF entity, wherein the deactivation message is configured to recover resources,
wherein the target base station comprises the serving base station and/or at least one neighboring base station.

4. The data transmission method according to claim 1, wherein bearing, by the preset message according to the positioning initiation request, the NRPPa message between the LMF entity and the target base station comprises:
bearing, by the preset message, the NRPPa message sent from the target base station to the LMF entity.

5. The data transmission method according to claim 4, wherein bearing, by the preset message, the NRPPa message sent from the target base station to the LMF entity comprises:
bearing, by a third type preset message, a positioning information response message sent from a serving base station to the LMF entity, wherein the positioning information response message is configured to respond to uplink channel SRS configuration information to the LMF entity; and/or
bearing, by the third type preset message, a positioning activation response message sent from the serving base station to the LMF entity; and/or
bearing, by a second type preset message and a fourth type preset message, a measurement response message sent from the serving base station or a neighboring base station to the LMF entity, wherein the measurement response message is configured to transfer an uplink channel SRS measurement result to the LMF entity,
wherein the target base station comprises the serving base station and/or at least one neighboring base station.

6. The data transmission method according to claim 1, wherein receiving the positioning initiation request sent from the LMF entity comprises:
receiving a first type preset message sent from the LMF entity, wherein the first type preset message bears the positioning initiation request.

7. The data transmission method according to any one of claims 3, 5 or 6, wherein the first type preset message is an N1N2 message transfer Namf_Communication_N1N2MessageTransfer message,
the second type preset message is a UE-independent N2 message transfer Namf_Communication_NonUeN2MessageTransfer message,
the third type preset message is an N2 message notification Namf_Communication_N2InfoNotify message, and
the fourth type preset message is a UE-independent N2 message notification Namf_Communication_NonUeN2InfoNotify message.

8. A positioning method applied to a location management function, called LMF, entity, comprising:
sending, in response to a positioning request sent from an access and mobility management function, called AMF, entity, a positioning initiation request to a user plane function, called UPF, entity, wherein the positioning request carries a user equipment, called UE, identifier of a target UE, and the positioning initiation request carries the UE identifier;
interacting a new radio positioning protocol annex, called NRPPa, message with a target base station through the UPF entity, wherein the target base station is a base station corresponding to the target UE, and the UPF entity bears, by a preset message, the NRPPa message between the LMF entity and the target base station; and
obtaining positioning result information and sending the positioning result information to the AMF entity.

9. The positioning method according to claim 8, wherein interacting the NRPPa message with the target base station through the UPF entity comprises:
sending to the UPF entity a second type preset message bearing a transmission reception point, called TRP, information exchange message sent from the LMF entity to a serving base station, wherein the TRP information exchange message is configured to obtain TRP configuration information;
sending to the UPF entity a first type preset message bearing a positioning information request message sent from the LMF entity to the serving base station, wherein the positioning information request message is configured to request uplink channel sounding reference signal, called SRS, configuration information of the target UE;
receiving a third type preset message which is sent from the UPF entity and bears a positioning information response message sent from the serving base station to the LMF entity, wherein the positioning information response message is configured to respond to the uplink channel SRS configuration information to the LMF entity;
sending to the UPF entity the first type preset message bearing a positioning activation request message sent from the LMF entity to the serving base station, wherein the positioning activation request message is configured to activate the target UE to send an SRS;
receiving the third type preset message which is sent from the UPF entity and bears a positioning activation response message sent from the serving base station to the LMF entity;
sending to the UPF entity a fourth type preset message bearing a measurement request message sent from the LMF entity to the serving base station or a neighboring base station, wherein the measurement request message is configured to transfer the uplink channel SRS configuration information to the serving base station or the neighboring base station;
receiving the second type preset message and the fourth type preset message which are sent from the UPF entity and bear a measurement response message sent from the serving base station or the neighboring base station to the LMF entity, wherein the measurement response message is configured to transfer an uplink channel SRS measurement result to the LMF entity; and
sending to the UPF entity the first type preset message bearing a deactivation message, wherein the deactivation message is configured to recover resources,
wherein the target base station comprises the serving base station and/or at least one neighboring base station.

10. The positioning method according to claim 8, wherein sending to the UPF entity the positioning initiation request comprises:
sending to the UPF entity a first type preset message bearing the positioning initiation request.

11. The positioning method according to claim 8 or 10, wherein the first type preset message is a Namf_Communication_N1N2MessageTransfer message,
the second type preset message is a Namf_Communication_NonUeN2MessageTransfer message,
the third type preset message is a Namf_Communication_N2InfoNotify message, and
the fourth type preset message is a Namf_Communication_NonUeN2InfoNotify message.

12. A data transmission method applied to a base station, comprising:
interacting a new radio positioning protocol annex, called NRPPa, message with a location management function, called LMF, entity through a user plane function, called UPF, entity, wherein the UPF entity bears, by a preset message, the NRPPa message between the LMF entity and the base station.

13. The data transmission method according to claim 12, wherein interacting the NRPPa message with the LMF entity through the UPF entity comprises:
receiving the preset message which is sent from the UPF entity and bears the NRPPa message sent from the LMF entity to the base station.

14. The data transmission method according to claim 13, wherein receiving the preset message which is sent from the UPF entity and bears the NRPPa message sent from the LMF entity to the base station comprises:
receiving a first type preset message which is sent from the UPF entity and bears a positioning information request message sent from the LMF entity to the serving base station, wherein the positioning information request message is configured to request uplink channel sounding reference signal, called SRS, configuration information of a target UE; and/or
receiving a second type preset message which is sent from the UPF entity and bears a transmission reception point, called TRP, information exchange message sent from the LMF entity to the serving base station, wherein the TRP information exchange message is configured to obtain TRP configuration information; and/or
receiving the first type preset message which is sent from the UPF entity and bears a positioning activation request message sent from the LMF entity to the serving base station, wherein the positioning activation request message is configured to activate the target UE to send an SRS; and/or
receiving a fourth type preset message which is sent from the UPF entity and bears a measurement request message sent from the LMF entity to the serving base station or a neighboring base station, wherein the measurement request message is configured to transfer the uplink channel SRS configuration information to the serving base station or the neighboring base station; and/or
receiving the first type preset message which is sent from the UPF entity and bears a deactivation message issued by the LMF entity, wherein the deactivation message is configured to recover resources,
wherein the base station is the serving base station or the neighboring base station.

15. The data transmission method according to claim 12, wherein interacting the NRPPa message with the LMF entity through the UPF entity comprises:
sending to the UPF entity the preset message bearing the NRPPa message sent from the base station to the LMF entity.

16. The data transmission method according to claim 15, wherein sending to the UPF entity the preset message bearing the NRPPa message sent from the base station to the LMF entity comprises:
sending to the UPF entity a third type preset message bearing a positioning information response message sent from the base station to the LMF entity, wherein the positioning information response message is configured to respond to uplink channel SRS configuration information to the LMF entity; and/or
sending to the UPF entity the third type preset message bearing a positioning activation response message sent from the base station to the LMF entity; and/or
sending to the UPF entity a second type preset message and a fourth type preset message bearing a measurement response message sent from the base station to the LMF entity, wherein the measurement response message is configured to transfer an uplink channel SRS measurement result to the LMF entity,
wherein the base station is a serving base station or a neighboring base station.

17. The data transmission method according to claim 14 or 16, wherein the first type preset message is a Namf_Communication_N1N2MessageTransfer message,
the second type preset message is a Namf_Communication_NonUeN2MessageTransfer message,
the third type preset message is a Namf_Communication_N2InfoNotify message, and
the fourth type preset message is a Namf_Communication_NonUeN2InfoNotify message.

18. A positioning method applied to an access and mobility management function, called AMF, entity, comprising:
sending a positioning request to a location management function, called LMF, entity, wherein the positioning request carries a user equipment, called UE, identifier of a target UE; and
receiving positioning result information sent from the LMF entity, wherein the LMF entity obtains and sends the positioning result information according to the positioning method of any one of claims 8 to 11.

19. The positioning method according to claim 18, wherein sending the positioning request to the LMF entity comprises:
sending to the LMF entity an Nlmf_Location_DetermineLocation message bearing the positioning request.

20. A user plane function, called UPF, entity, comprising:
one or more processors; and
a memory having one or more programs stored thereon which, when executed by the one or more processors, cause the one or more processors to implement the data transmission method according to any one of claims 1 to 7.

21. A location management function, called LMF, entity, comprising:
one or more processors; and
a memory having one or more programs stored thereon which, when executed by the one or more processors, cause the one or more processors to implement the positioning method according to any one of claims 8 to 11.

22. A base station, comprising:
one or more processors; and
a memory having one or more programs stored thereon which, when executed by the one or more processors, cause the one or more processors to implement the data transmission method according to any one of claims 12 to 17.

23. An access and mobility management function, called AMF, entity, comprising:
one or more processors;
a memory having one or more programs stored thereon which, when executed by the one or more processors, cause the one or more processors to implement the positioning method according to claim 18 or 19.

24. A computer-readable medium storing a computer program thereon which, when executed by a processor, causes any one of:
the data transmission method according to any one of claims 1 to 7;
the positioning method according to any one of claims 8 to 11;
the data transmission method according to any one of claims 12 to 17; or
the positioning method according to claim 18 or claim 19, to be implemented.
